# FASCICULE DE BREVET EUROPEEN

(11) **EP 0 677 425 B1**
(45) Date de publication et mention de la délivrance du brevet: **24.06.1998**
(21) Numéro de dépôt: 95440013.1
(22) Date de dépôt: 03.04.1995
(51) Int. Cl.: B60P 3/22, B62D 21/00

(54) **Châssis reconstitué en tôle pliée et soudée pour le maintien d'une benne à flancs convergents**
Rahmen, hergestellt aus gefaltetem und geschweisstem Metallblech, zur Aufnahme eines Behälters mit konvergierenden Seiten
Frame constructed of pressed and welded steel sheet, for holding a container with converging sides

(30) Priorité: 15.04.1994 FR 9404770
(43) Date de publication de la demande: 18.10.1995
(73) Titulaire: LOHR INDUSTRIE, 67980 Hangenbieten (FR)
(72) Inventeur: Andre, Jean-Luc, F-67210 Obernai (FR)
(74) Mandataire: Metz, Paul

(56) Documents cités:
- DE-A- 1 455 575
- DE-A- 2 118 094
- DE-C- 675 922
- FR-A- 1 510 065
- FR-A- 2 240 138
- FR-A- 2 634 440
- US-A- 1 856 399
- US-A- 2 026 826
- US-A- 2 792 231

## Description

La présente invention se rapporte à une structure de châssis pour la réception d'un corps de benne, telle que définie dans le préambule de la revendication 1 et décrite dans DE-A-1455 575.

Plus particulièrement, il s'agit d'un châssis reconstitué en tôle pliée et soudée destiné à recevoir un corps de benne basculante à flancs convergeant vers le bas.

Les bennes classiques basculantes présentent un corps de benne composé d'un fond plat et de parois latérales verticales perpendiculaires au fond. Pour des raisons de solidité générale, et de résistance aux chocs, le fond est renforcé sur sa face extérieure de nervures et de renforts transversaux en surépaisseur formant une véritable structure saillante. Les parois latérales ou flancs sont également renforcés le long de leurs bords, mais aussi bien souvent sur leur surface latérale extérieure par des renforts ou raidisseurs transversaux ou par un renfort unique oblique le long de toute la surface extérieure du flanc.

Ces structures de renfort compliquent et renchérissent notablement la construction de la benne.

Il existe par ailleurs, des bennes à section transversale bombée convexe dont la benne possède, solidarisée à son corps, une structure de renforcement sous la forme d'un cadre à deux longerons de rigidification par lesquels elle repose sur le chassis du camion.

Ce type de bennes présentent d'importants avantages en simplicité et en facilité de construction et apportent finalement une efficacité nouvelle en exploitation. Elles sont notamment plus performantes au vidage en raison de l'absence de zone(s) anguleuse(s) sur le profil de la paroi intérieure du corps de benne et présentent une meilleure stabilité latérale pendant le roulage.

Selon une variante allégée, des bennes du type à corps semi-cylindrique sont portées et logées par la partie inférieure de leur surface latérale ou fond dans une structure réceptrice continue en forme de berceau posée sur le châssis.

Cette structure épouse autant que possible le fond de la benne et garantit sa stabilité latérale car celle-ci présente une surface continue de portée.

Cependant, si les conditions d'exploitation de telles bennes peuvent s'annoncer plus simples ou moins onéreuses, la pratique montre que la réalisation de celles-ci se heurte à plusieurs difficultés techniques.

La structure réceptrice en forme de berceau rapportée sur le châssis du véhicule à moteur ou de la remorque constitue ainsi une véritable unité porteuse spécifique additionnelle au châssis. Celle-ci ou faux châssis présente sa propre épaisseur qui augmente d'autant la hauteur du berceau par rapport au sol et donc celle de la benne.

Par ailleurs, une des variantes de réalisation du berceau consiste à le former à partir d'un nombre restreint de formats disponibles dans le commerce de tôle à cintrer puis à souder en succession longitudinale.

Ces constructions nécessitent la présence de moyens de manutention de tôles de grand format.

De plus, cette technique constructive oblige le constructeur à disposer d'une cintreuse de grande dimension et d'avoir résolu au préalable la difficulté technique du cintrage de la tôle d'acier à haute limite élastique.

Ces contraintes représentent une difficulté technique et économique telle que tous les systèmes de bennes de ce type à berceau récepteur visibles sur le marché sont construites à partir de tôles pliées conférant au berceau une section polygonale.

Par ailleurs, les quelques avantages de ces structures réceptrices sont notablement amoindris par plusieurs inconvénients simultanés suivants.

Le premier est lié à la difficulté technique, déjà mentionnée, de réaliser le corps semi-cylindrique du berceau, par cintrage à partir d'une certaine dimension d'une feuille de tôle, ceci en raison de la nécessaire épaisseur de la tôle, des possibilités techniques des cintreuses existant actuellement et des caractéristiques nécessaires d'élasticité de l'acier utilisé.

Ainsi, seuls des berceaux à surface latérale de forme polygonale sont disponibles actuellement en raison des limitations techniques liées aux moyens de production et aux caractéristiques de la matière.

Le second inconvénient concerne les ennuis de coincement souvent avec blocage et détérioration provoqués par les cailloux et saletés pouvant se glisser en cours de manoeuvre entre le corps de la benne et le berceau qui le supporte.

Un autre inconvénient réside dans le surcroit de masse à vide que représente le berceau continu sur toute la longueur de la benne qu'il est nécessaire de prévoir.

Encore un autre inconvénient provient de la difficulté extrême de rester parfaitement concentrique sur toute l'étendue de la section transversale et toute la longueur du corps de la benne.

Finalement, la mise en oeuvre de telles bennes s'avère moins performante que prévue.

Le but de la présente invention est de proposer une structure de châssis adaptée à recevoir directement le corps d'une benne basculante et qui permet d'en simplifier sensiblement la construction.

Ainsi, la présente invention permet de supprimer les différents inconvénients précédemment cités, notamment la nécessité de rapporter une structure de réception sur le châssis et ceux liés à la présence de déchets, débris ou autres corps pouvant venir s'interposer entre le corps de la benne et la surface d'encastrement du berceau.

En effet, selon l'invention définie dans la revendication 1, la structure de châssis porte le corps de benne uniquement par ses flancs. Il n'existe donc plus de faux châssis intermédiaire ni de cadre de fond de benne à construire.

La structure de châssis permet aussi de maintenir de façon efficace toutes les bennes à section curviligne et notamment circulaire.

Elle permet surtout de disposer d'un seul châssis adapté à la réception et au maintien de tous les corps de benne à flancs convergents.

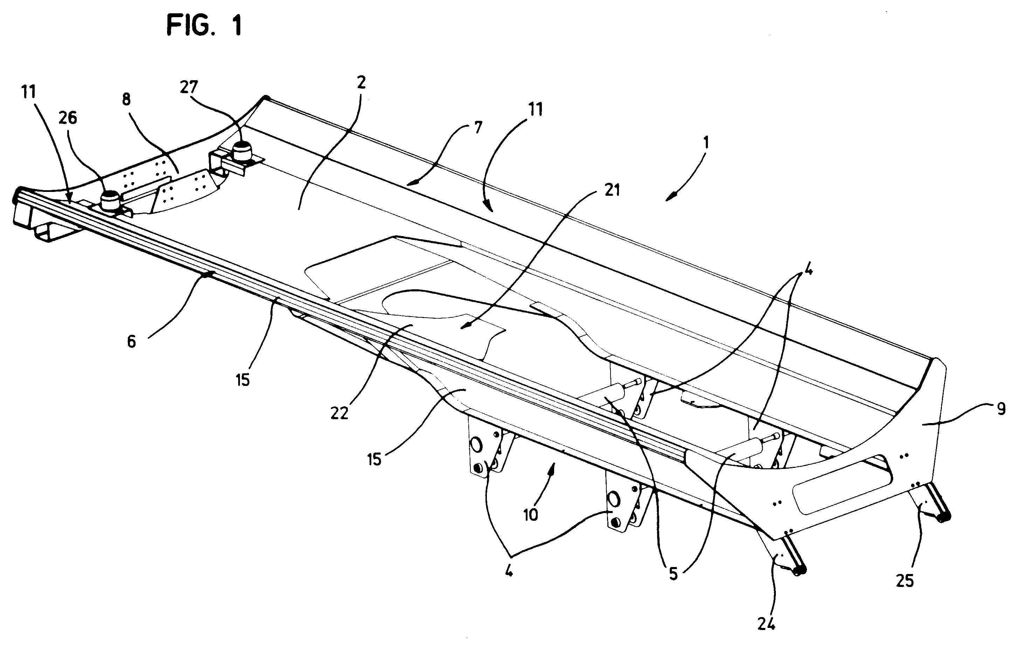

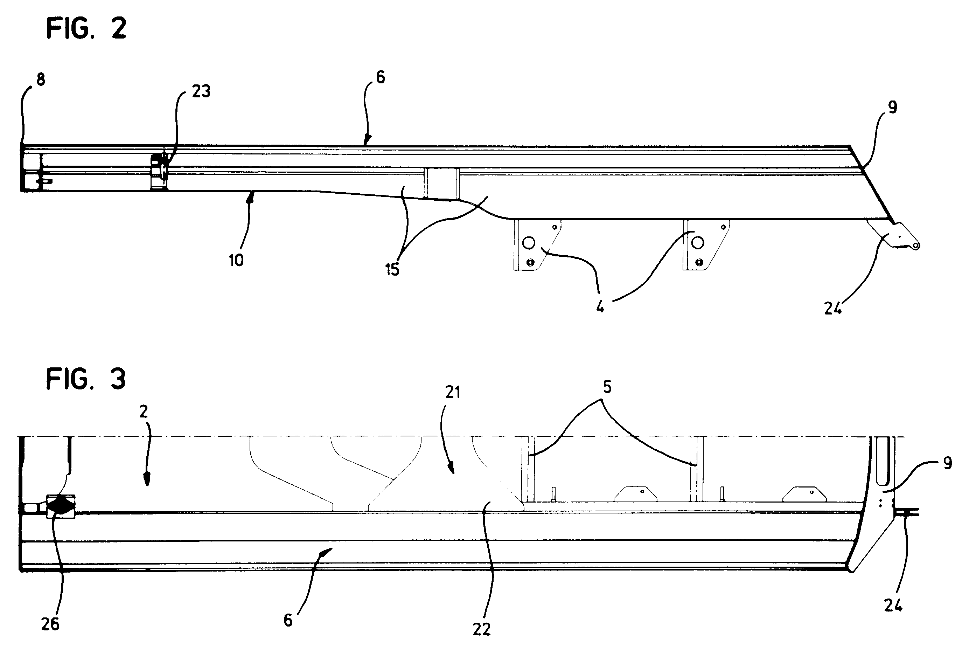

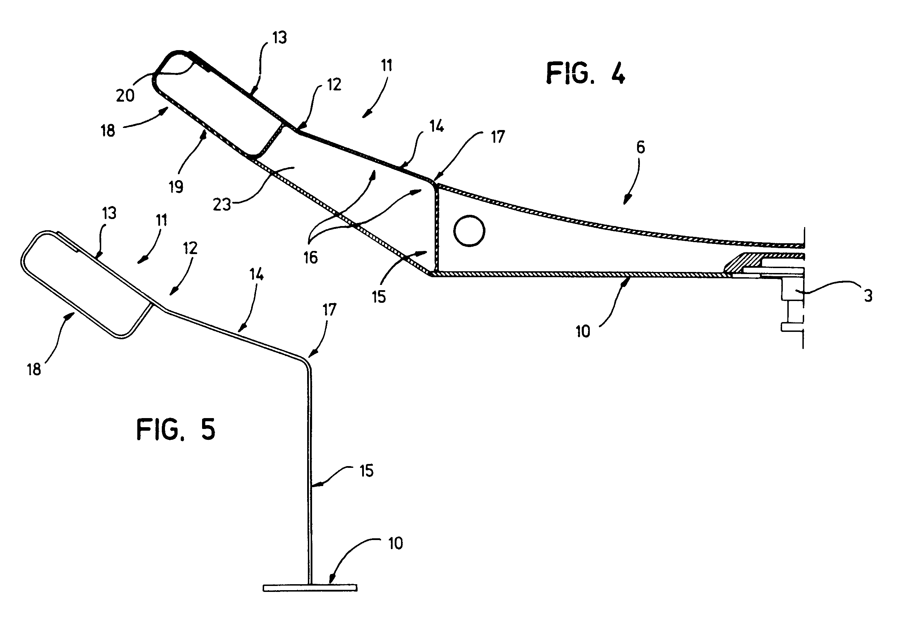

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue schématique simplifiée d'ensemble en perspective de la structure de châssis selon l'invention,
. la figure 2 est une vue de profil de l'ensemble de la structure de châssis,
. la figure 3 est une demi-vue en plan de la structure de châssis,
. les figures 4 et 5 sont des demi-vues en coupe transversale respectivement à l'avant et sur la partie médiane arrière.

La structure de châssis est destinée à être portée par un train roulant d'un véhicule, remorque, semi-remorque, châssis-cabine ou analogue.

Sur la figure 1, on a représenté un exemple de structure de châssis 1 prévue pour une semi-remorque. Celle-ci présente donc un renforcement transversal 2 à l'avant servant à la rigidification locale de la structure de châssis 1 au niveau du point d'accouplement qui s'effectue classiquement par une cheville ouvrière 3 (figure 4) coopérant avec la sellette d'un tracteur.

Dans le cas représenté, la structure de châssis 1 selon l'invention vient se monter directement sur un train roulant de semi-remorque formé par exemple d'une paire d'essieux reliés à ladite structure de châssis 1 par une suspension appropriée présentant des supports de reprise tels que 4 représentés sur la figure 1 et reliés entre eux par des barres de jumelage 5.

A cet effet, la structure de châssis 1 se présente sous la forme d'un corps rectiligne délimité longitudinalement par deux longerons reconstitués 6 et 7 rectilignes et parallèles fermés latéralement à chacune de leurs extrémités par une plaque transversale d'extrémité l'une avant 8, l'autre arrière 9.

Selon la forme de réalisation préférée et représentée, la plaque transversale d'extrémité avant 8 est verticale alors que la plaque transversale d'extrémité arrière 9 est prévue inclinée montante vers l'avant.

Les longerons 6 et 7 affectent une forme de profil telle que représentée sur les figures 4 et 5.

Cette forme de profil se décompose en une partie inférieure horizontale en tôle ou semelle inférieure 10 et une partie supérieure oblique ou semelle supérieure 11 présentant une légère cassure 12 médiane donnant à cette partie l'allure d'un angle obtus ouvert vers le haut pouvant devenir presque plat formé de deux plans sécants 13 et 14.

Les semelles inférieure 10 et supérieure 11 sont réunies entre elles par un voile ou âme 15 de tôle sensiblement verticale constituant la branche de liaison de hauteur variable selon l'endroit sur la longueur de la benne.

L'âme 15 et la semelle supérieure 11 sont réalisées dans un même format 16 de tôle par deux pliures longitudinales : une pliure 17 entre l'âme montante verticale 15 et la semelle supérieure 11 et une autre pliure constituée par la cassure 12.

Cette forme de profil réalisée dans une seule tôle 16 est renforcée à son extrémité sur toute sa longueur par un caisson longitudinal 18 constitué également d'une tôle pliée 19 en U avec retour d'appui 20, fermée sur l'extrémité de la semelle supérieure 11.

Bien entendu, le caisson peut aussi bien être formé par le retour de la tôle 16 utilisée pour la semelle supérieure 11 et l'âme 15.

Des liaisons transversales 21 en tôle réunissent localement les deux longerons. De largeur limitée, réalisées également en tôle, elles font office de traverses ponctuelles. Elles existent en nombre suffisant le long des longerons 6 et 7.

Pour permettre de rabaisser de façon intéressante le centre de gravité de la benne leur forme vue en coupe verticale est incurvée bombée convexe c'est-à-dire à concavité tournée vers le haut. Par ailleurs, elles affectent une forme vue en plan du type à extrémités élargies telles que 22, par exemple, en éventail, pour réduire la concentration des contraintes sur les lignes de jonction avec la base des longerons 6 et 7 au droit desquelles elles sont reliées.

Finalement, les liaisons transversales 21 incurvées vers le haut descendent sous le niveau inférieur des longerons 6 et 7.

Les longerons 6 et 7 sont soutenus à intervalles par des renforts transversaux ou gousset 23 constitués de plaques transversales réalisant une liaison mécanique entre le caisson 18 et la semelle inférieure 10.

La hauteur de l'âme montante 15 varie selon l'endroit sur toute la longueur de la benne faible à l'avant, elle devient rapidement plus importante par une zone de transition médiane de faible longueur entre l'avant et la partie arrière qui repose sur le train de roues afin d'obtenir une inertie variable dans le sens longitudinal.

La liaison avec le train de roues s'effectue par l'intermédiaire des supports de reprise tels que 4 présents sous les longerons 6 et 7 au niveau de chaque essieu. Les parties supérieures de ces supports de reprise 4 se faisant face sont reliées par les barres de jumelage 5.

On a prévu à l'arrière du châssis des extensions inférieures 24 et 25 disposées en oblique pour le montage d'une barre anti-encastrement ainsi que des moyens d'articulation nécessaires à l'articulation de basculement du corps de benne.

Il existe à l'avant d'une part deux tamponnoirs tels que 26 et 27 permettant d'absorber les vibrations pendant le roulage à vide et d'amortir les chocs lors de son abaissement et d'autre part les organes de reprise du vérin de levage.

## Revendications

1. Structure de châssis pour la réception entre deux longerons séparés par des traverses d'un corps de benne basculante présentant des flancs convergents vers le bas sur toute sa partie latérale caractérisée en ce que les deux longerons sont des longerons (6,7) reconstitués à partir de feuilles de tôle présentant chacun une semelle supérieure (11) formant une plage d'appui longitudinal oblique dans un plan de coupe transversale à la structure de châssis et en contact avec les flancs convergents du corps de benne, plage d'appui prolongée jusqu'à une semelle inférieure (10) par une âme (15) sensiblement verticale en tôle, lesdits longerons (6,7) étant réunis entre eux par deux traverses d'extrémité (8,9) et des liaisons transversales locales (21).

2. Structure de châssis selon la revendication 1 caractérisée en ce que la plage d'appui longitudinal est formée de deux plans obliques sécants (13,14).

3. Structure de châssis selon la revendication 2 caractérisée en ce que les deux plans obliques sécants (13,14) constituant la plage d'appui longitudinal déterminent entre eux un angle obtus ouvert vers le haut et presque plat.

4. Structure de châssis selon la revendication 1 caractérisée en ce que chaque semelle supérieure (11) est formée d'une tôle pliée (16).

5. Structure de châssis selon la revendication 4 caractérisée en ce que chacune des semelles supérieures (11) formées d'une tôle pliée (16) est doublée dans sa partie inférieure par un bord en caisson (18).

6. Structure de châssis selon la revendication 5 caractérisée en ce que chacune des semelles supérieures (11) formées d'une tôle pliée (16) est doublée en extrémité de sa partie inférieure par un bord en caisson (18).

7. Structure de châssis selon la revendication 6 caractérisée en ce que le bord en caisson (18) présente un retour (20).

8. Structure de châssis selon l'une quelconque des revendications précédentes caractérisée en ce que l'âme (15) est de hauteur différente sur la longueur du châssis (1).

9. Structure de châssis selon l'une quelconque des revendications précédentes caractérisée en ce que les liaisons transversales locales (21) sont en tôle et présentent une forme incurvée vers le haut dans un plan transversal.

10. Structure de châssis selon l'une quelconque des revendications précédentes caractérisée en ce que les liaisons transversales locales (21) présentent des extrémités évasées (22).

11. Structure de châssis selon la revendication 10 caractérisée en ce que les liaisons transversales locales (21) incurvées vers le haut descendent sous le niveau inférieur des longerons (6,7).

## Claims

1. Frame structure for receiving between two longitudinal members separated by cross-members a tipper skip body having sides converging towards the bottom over the whole of its lateral part, characterized in that the two longitudinal members are longitudinal members (6, 7) reconstituted from steel sheets each having an upper sole plate (11) forming an inclined longitudinal support area in a section plane transverse to the frame structure and in contact with the converging sides of the skip body, which support area is extended as far as a lower sole plate (10) by a substantially vertical core (15) of steel sheet, the said longitudinal members (6, 7) being joined to each other by two end cross-members (8, 9) and local transverse connections (21).

2. Frame structure according to Claim 1, characterized in that the longitudinal support area is formed of two intersecting inclined planes (13, 14).

3. Frame structure according to Claim 2, characterized in that the two intersecting inclined planes (13, 14) constituting the longitudinal support area determine between them an obtuse angle open at the top and almost flat.

4. Frame structure according to Claim 1, characterized in that each upper sole plate (11) is formed of a folded steel sheet (16).

5. Frame structure according to Claim 4, characterized in that each of the upper sole plates (11) formed of a folded steel sheet (16) is lined in its lower part by a box edge (18).

6. Frame structure according to Claim 5, characterized in that each of the upper sole plates (11) formed of a folded steel sheet (16) is lined at the end of its lower part by a box edge (18).

7. Frame structure according to Claim 6, characterized in that the box edge (18) has a return (20).

8. Frame structure according to any one of the preceding claims, characterized in that the core (15) is of differing height over the length of the frame (1).

9. Frame structure according to any one of the preceding claims, characterized in that the local transverse connections (21) are of steel sheet and have a shape which is curved upwards in a transverse plane.

10. Frame structure according to any one of the preceding claims, characterized in that the local transverse connections (21) have flared ends (22).

11. Frame structure according to Claim 10, characterized in that the local transverse connections (21) curved upwards descend beneath the lower level of the longitudinal members (6, 7).

## Patentansprüche

1. Gestellaufbau für die Aufnahme zwischen zwei durch Querträger auseinandergehaltenen Längsträgern eines Kippbehälters, der auf seinen gesamten Seitenflächen Wandungen aufweist, die nach unten konvergent sind,
**dadurch gekennzeichnet,** daß
es sich bei den beiden Längsträgern um zwei Längsträger (6,7) handelt, die aus Blechtafeln hergestellt sind und jeweils eine obere Platte (11) aufweisen, die einen schrägen, länglichen Auflagebereich in einer Schnittebene quer zu dem Gestellaufbau und an den konvergenten Wandungen des Kippbehälters anliegend bildet, wobei der Auflagebereich bis zu einer unteren Platte (10) durch ein im wesentlichen senkrechtes Stegblech (15) weitergeführt ist, wobei die Längsträger (6,7) untereinander durch zwei Kopfquerstücke (8,9) und durch örtliche querliegende Verbindungen (21) vereinigt sind.

2. Gestellaufbau nach Anspruch 1,
**dadurch gekennzeichnet,** daß
der längliche Auflagebereich aus zwei sich schneidenden, schrägen Ebenen (13,14) gebildet wird.

3. Gestellaufbau nach Anspruch 2,
**dadurch gekennzeichnet,** daß
die beiden sich schneidenden, schrägen Ebenen (13, 14) des länglichen Auflagebereichs untereinander einen stumpfen Winkel bilden, der nach oben offen und fast flach ist.

4. Gestellaufbau nach Anspruch 1,
**dadurch gekennzeichnet,** daß
jede obere Platte (11) aus einem gebogenen Blech (16) besteht.

5. Gestellaufbau nach Anspruch 4,
**dadurch gekennzeichnet,** daß
jede der oberen Platten (11), die aus einem gebogenen Blech (16) bestehen, an ihrem unteren Teil durch einen kastenförmigen Rand (18) gedoppelt ist.

6. Gestellaufbau nach Anspruch 5,
**dadurch gekennzeichnet,** daß
jede der oberen Platten (11), die aus einem gebogenen Blech (16) bestehen, am Ende ihres unteren Teils durch einen kastenförmigen Rand (18) gedoppelt ist.

7. Gestellaufbau nach Anspruch 6,
**dadurch gekennzeichnet,** daß
der kastenförmige Rand (18) eine Umkehrung (20) aufweist.

8. Gestellaufbau nach irgendeinem der vorstehenden Ansprüche,
**dadurch gekennzeichnet,** daß
das Stegblech (15) über die Länge des Gestells (1) unterschiedliche Höhen aufweist.

9. Gestellaufbau nach irgendeinem der vorstehenden Ansprüche,
**dadurch gekennzeichnet,** daß
die örtlichen querliegenden Verbindungen (21) aus Blech bestehen und eine nach oben krumme Form in einer querliegenden Ebene aufweisen.

10. Gestellaufbau nach irgendeinem der vorstehenden Ansprüche,
**dadurch gekennzeichnet,** daß
die örtlichen querliegenden Verbindungen (21) aufgeweitete Endstücke (22) aufweisen.

11. Gestellaufbau nach Anspruch 10,
**dadurch gekennzeichnet,** daß
die örtlichen querliegenden Verbindungen (21), die einen nach oben krumme Form aufweisen, unter der unteren Ebene der Längsträger (6,7) geführt sind.
